(19) **Europäisches Patentamt**
**European Patent Office**
**Office européen des brevets**

(11) **EP 4 692 740 A1**

(12) **EUROPEAN PATENT APPLICATION**

(43) Date of publication:
**11.02.2026 Bulletin 2026/07**

(51) International Patent Classification (IPC):
**G01G 19/02** (2006.01)

(21) Application number: **24465555.1**

(22) Date of filing: **07.08.2024**

(52) Cooperative Patent Classification (CPC):
**G01G 19/022**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **AUMOVIO Germany GmbH**
**60488 Frankfurt am Main (DE)**

(72) Inventors:
• **Dr. Cimponeriu, Andrei-Stefan**
**300704 Timisoara (RO)**
• **Schlößer, Stefan**
**30175 Hannover (DE)**

(74) Representative: **Aumovio Corporation**
**AUMOVIO Germany GmbH**
**Taunusstraße 36**
**80807 München (DE)**

(54) **METHOD FOR DETERMINING A TOTAL MASS OF A MOTOR VEHICLE**

(57) The present invention discloses a method (100) for determining total mass of a motor vehicle with at least one wheel during operation, based on of Newton's second law of dynamics, using vehicle longitudinal force (10) and associated longitudinal acceleration (20) related signals existing on a vehicle bus (1), particularly on a vehicle CAN bus, wherein frequency filtering, particularly bandpass frequency filtering, is applied to the longitudinal force (10) and the longitudinal acceleration (20), particularly to remove force components and acceleration components caused by slowly-varying forces or effects of aerodynamic drag and/or uphill slopes and/or downhill slopes, and wherein the mass calculation be only performed during a predetermined, particularly longitudinal or linear or otherwise appropriate, motion of the vehicle.

100

Fig. 2

EP 4 692 740 A1

**Description**

The invention relates to a method for determining a total mass of a motor vehicle with at least one wheel during operation of the motor vehicle.

Nowadays, motor vehicles comprise a vast number of monitoring and information systems that monitor the condition of the motor vehicle and individual motor vehicle components and, for example, provide information from one vehicle component to another, or to provide a driver of the motor vehicle with information about the motor vehicle, or for warning purposes.

One of these systems is a tyre information system (TIS). While originally devised to just provide the tyre pressures, TIS is evolving towards providing more extensive information about tyres, such as tread depth. Tread depth reduction is caused by abrasion at the tyre/road interface. A factor of the abrasion is the vertical force acting on the tyre, which is related to the vehicle mass.

There is therefore a need for a method for determining the current total mass of a motor vehicle in the context of tread depth determination or monitoring of a tyre information system. Moreover, the determined mass can also be made available to other vehicle systems, such as vehicle dynamics control systems and systems for improving driving comfort. By knowing the current total mass of the vehicle, these systems can be improved with regard to their control algorithms, to further increase safety and/or comfort of the motor vehicle.

It is therefore an object of the present invention to provide a method for determining the total mass of a motor vehicle which enables a cost-effective, simple, in particular computer-resource-saving, determination of the total mass, which is a particular requirement within the context of a tyre information system.

The foregoing object is solved by a method according to claim 1. Further embodiments and advantageous further developments of the present invention are indicated in the description below and in the dependent claims.

The invention particularly uses Newton's second law of dynamics applied to the vehicle longitudinal motion, such that the vehicle mass is essentially calculated as the vehicle longitudinal force divided by the vehicle longitudinal acceleration. The vehicle motion can be caused either by traction, if the drive axle is the front axle, by propulsion if the drive axle is the rear axle, or by both, for 4WD vehicles. In the following, without restraining the scope of the invention, a single drive axle and a single axle torque are considered; in case of more, addition of torques is to be performed. Traction and propulsion are not specified separately but simply create the longitudinal force.

Longitudinal forces are effectively obtained, when the vehicle is driven, at the tyre/road interface. If motion is straight, forces are longitudinal and, if wheels slip is reasonably small, can be calculated using the wheels or drive axle torque and the wheels radius. Wheel torques are caused by engine and transmission of the vehicle. On some vehicles axle torques values are readily provided on the vehicle bus, which in particular is designed as a CAN busOn others, just the engine torque values are available and axle torque(s) can be calculated using the transmission ratio, which can be readily provided on the vehicle bus or can be calculated using engine RPM (Revolutions Per Minute) and wheels RPM values, generally available on the vehicle bus. On some vehicles braking torque values are also available on the vehicle bus and can be included in the longitudinal force.

The vehicle longitudinal force results in the vehicle longitudinal acceleration, which is particularly measured by a vehicle Inertial Measuring Unit and available on the vehicle bus. The longitudinal force and the corresponding longitudinal acceleration provide the basic information used in this invention.

Auxiliary information is also typically available on the vehicle bus and can be used in the invention: signals related to the driving conditions such as vehicle speed, steering angle, vehicle lateral acceleration, yaw rate and wheel speeds, needed to just consider linear longitudinal motion. Other auxiliary information which can be used in the invention is provided by signals related to transmission, some of which are generally available like engine RPM and wheels speeds, and some available depending on the specific vehicle type and make, like transmission rate, gear, clutch pedal position, braking pedal position.

According to a preferred embodiment, vehicle longitudinal force is calculated using engine torque-related information available on the vehicle bus, and the wheel or tyre radius, preferably wherein the longitudinal acceleration is retrieved from the vehicle bus.

Particularly, the frequency filtering applied to the longitudinal force and the longitudinal acceleration is done before the total mass calculation based on of Newton's second law.

According to a further preferred embodiment both longitudinal force and longitudinal acceleration are subject to low-pass frequency filtering to remove noise, then band-pass frequency filtering to remove slowly-varying forces such as aerodynamic drag and/or uphill slopes and/or downhill slopes, and the corresponding slowly-varying acceleration component.

According to a further preferred embodiment, this processing is then followed by a situation OK filter, which selects predetermined or appropriate driving situations and the corresponding time intervals involving just linear longitudinal motion. The situation OK filter requires the auxiliary information mentioned above and uses predetermined, particularly appropriately chosen, thresholds to enforce a predetermined, particularly a predetermined little, cornering or lateral motion as provided by lateral acceleration and yaw rate signals, and/or a predetermined, particularly a predetermined little, wheels slip as provided by front-rear wheel speeds relative difference and/or non-changing gear or transmission ratio and/or predetermined, particularly predetermined appropriate, ranges for vehicle speed and/or longitudinal acceleration. If braking force is not included in the longitudinal force, situation OK filter also excludes the situations when braking takes place.

According to a further preferred embodiment, the auxiliary signals are object to the same low-pass frequency filtering as the longitudinal force and longitudinal acceleration.

According to a further preferred embodiment, in case the motor vehicle comprises an automatic gearbox, and in case an instantaneous axle torque of the motor vehicle is available on the vehicle bus, the longitudinal force is calculated by dividing the axle torque by the wheels radius, wherein in case the axle torque is not available on the vehicle bus, it is calculated by multiplying an instantaneous engine torque by a transmission ratio as provided by the vehicle bus or calculated as the ratio between engine RPM and the wheels RPM. In case a braking torque is also available, it can be included in the longitudinal force.

According to a further preferred embodiment, in case the motor vehicle comprises a manual transmission, and in case axle torque is not available on the vehicle bus, the longitudinal force and its associated longitudinal acceleration are determined and/or used only when the longitudinal force is determined to be valid, preferably wherein the longitudinal force is determined to be valid when the transmission chain of the vehicle is closed and stable, particularly preferably when a clutch pedal of the vehicle is not depressed and/or gear is engaged and not in neutral position and/or transmission rate is not subject to transients. In case braking torque is not available, not depressing the braking pedal can be an additional validation condition for the longitudinal force.

According to a further preferred embodiment, total mass is calculated as the ratio between the RMS value (Root Mean Square value) of the longitudinal force divided by the RMS value of the longitudinal acceleration, preferably wherein both RMS values are calculated during validity intervals resulting from the situation OK filter, starting from a predetermined, particularly suitably chosen, initial time up to the current time and using either values obtained from the band-pass filtering step, or by exponentially smoothing the values resulting from the band-pass filtering step.

According to a further preferred embodiment, raw momentary total mass calculations at current time are performed during the validity intervals provided by the situation OK filter, by dividing the raw momentary RMS value of the, particularly band-pass filtered, longitudinal force by the raw momentary RMS value of the, particularly band-pass filtered, longitudinal acceleration.

According to a further preferred embodiment, raw momentary total mass calculations at current time are calculated by performing linear regression of the longitudinal force and the longitudinal acceleration pair values during the validity intervals provided by the situation OK filter.

According to a further preferred embodiment, first raw momentary total mass values are calculated during a current validity interval provided by the situation OK filter, as a slope of linear regression of the, particularly band-pass filtered, longitudinal force as a function of the, particularly band-pass filtered, longitudinal acceleration, wherein second raw momentary total mass values are calculated as an inverse slope of linear regression of the, particularly band-pass filtered, longitudinal acceleration as a function of the, particularly band-pass filtered, longitudinal force, preferably wherein noise in the data of longitudinal acceleration and longitudinal force and/or in the first and second raw momentary total mass values is evaluated using first and second raw momentary total mass values, particularly preferably if noise exceeds a predetermined threshold, the second raw momentary total mass value is discarded. In principle, it is possible to consider the longitudinal acceleration as the independent variable and longitudinal force as the dependent one, and the regression slope of the longitudinal force as a function of the acceleration, which has the dimension of mass, as a vehicle mass calculation. However, ordinary linear regression considers independent variable values noiseless and minimizes noise in dependent variable. In preferably case longitudinal force is calculated by an Engine Control Unit of the vehicle and is relatively noise free, while longitudinal acceleration is measured by an accelerometer and is subject to road irregularities and noise. Therefore, it is of advantage to consider longitudinal force as the independent variable and longitudinal acceleration as the dependent one and to perform linear regression on the longitudinal acceleration as a function of the longitudinal force. Consequently, the regression slope has the dimension of inverse mass and the vehicle momentary total mass is given by a second raw momentary total mass value calculated as the inverse value of the regression slope of the longitudinal acceleration as a function of the longitudinal force for the considered situation OK interval. The difference between the first raw momentary total mass value and the second raw momentary total mass value can be used to evaluate noise in the data; if their relative difference is large than a predetermined, particularly an appropriately chosen, threshold, the current second raw momentary total mass value is discarded.

According to a further preferred embodiment, the situation OK intervals are subject to an additional constraint, wherein the additional constraint is a minimum range of longitudinal accelerations and/or a minimum number of longitudinal force and longitudinal acceleration samples existing in the interval. In this way, the most reliable data possible is used for the total mass calculations.

According to a further preferred embodiment, a factor that reduces the engine torque, and subsequently the vehicle total mass calculations is included in the longitudinal force calculation, as a gear efficiency or transmission efficiency. Depending on the available vehicle bus signals, transmission efficiency can be considered a function of the engaged gear or of the transmission ratio. The engaged gear can exist on manual transmission vehicles and be readily transmitted on the vehicle bus. On automatic gearbox vehicles the transmission ratio can be transmitted instead. Otherwise, for both manual and automatic gearbox vehicles they can be determined as the ratios between the Engine Rotation Speed and the Wheels Rotation Speed, both typically available on the vehicle bus.

The simplest calculations are obtained by considering that the engaged gear or transmission rate depending efficiencies are constants. A first possible embodiment related to constant transmission efficiencies is obtained when learning efficiencies from scratch, without any prior knowledge. A second possible embodiment related to transmission efficiency is obtained when prior learning has been performed and provides an initialization value, and learning continues - referred to as version ES (from Exponential Smoothing, also known as Exponential Moving Average). Within a third possible embodiment related to transmission efficiency, transmission efficiencies are considered as depending on the engine RPM and are approximated as linear or quadratic polynomials.

According to a further preferred embodiment, power losses on the transmission chain of the vehicle that depend on transmission ratio or engaged gear are taken into account as subunitary efficiencies, wherein corrected momentary total mass values are calculated by multiplying the raw momentary total mass values by the subunitary efficiencies, preferably wherein gear efficiency calculations are performed on a gear or transmission ratio basis corresponding to the validity interval provided by the situation OK filter, particularly preferably wherein the gear or transmission ratio input to the gear-dependent efficiency input to these calculations is delayed by the same amount of time that the, particularly low-pass, filtering creates.

According to a further preferred embodiment, gear efficiencies are calculated and learned during a predetermined, particularly suitably performed, calibration driving cycle, particularly when the vehicle is weighted and its total mass is known, using raw momentary total mass calculations and the known total mass, preferably wherein after the gear efficiencies have been learned, in ordinary driving operation of the vehicle, corrected momentary total mass values are calculated by multiplying the raw momentary total mass values by the learned gear efficiencies

According to a further preferred embodiment, gear efficiencies are considered as depending on the vehicle engine rotational speed and are approximated as linear or quadratic polynomials. Polynomial regression can be iteratively performed separately for each gear or transmission ratio, using the current engine RPM and raw transmission ratio, by Least Mean Squares or Recursive Least Squares, on data acquired in training or learning driving cycles, to be eventually stored. Following learning, for each situation OK interval the efficiency values can be retrieved from the current gear and engine RPM, and used for vehicle total mass corrections.

According to a further preferred embodiment, the dependence of transmission chain efficiency on engine coolant temperature can be similarly included in the longitudinal force calculation and in raw mass calculations corrections. This dependence can either be provided by the vehicle manufacturer for specified engine oils, or be learned during a learning phase, for example by performing several driving cycles starting with the engine cold, at various ambient temperatures, with a known vehicle mass, particularly similar to learning gear efficiencies.

According to a further preferred embodiment, power losses depending on the temperature of an engine coolant are also taken into account as subunitary efficiencies, wherein corrected vehicle momentary total mass values are calculated by multiplying the raw momentary total mass values by the considered subunitary efficiencies, preferably wherein the power losses depending on the temperature of the engine coolant are learned during a number of predetermined calibration driving cycles, using weighted vehicle, particularly preferably performed starting with various low temperatures.

According to a further preferred embodiment, momentary mass calculations are processed statistically, by calculating their mean since the starting time until the current time, and the standard deviation of the mean. The mean provides the current vehicle mass estimation. The standard deviation of the mean is a measure of estimation error; when the relative error, that is the ratio between the standard deviation and the mean takes values below a predetermined, particularly suitable chosen, threshold, e.g. 5%, convergence can be considered as reached and vehicle mass estimation be transmitted as the final output of the method.

According to a further preferred embodiment, the total mass at current time is calculated by applying a statistical method on the raw momentary total mass values or the corrected momentary total mass values, particularly corrected for gear efficiencies, preferably performed starting from a predetermined, particularly suitably chosen, starting time until the current time, particularly the ending time of the calculations, or based on a convergence time when the relative error of the total mass calculation, particularly evaluated as the ratio between a measure of the noise in the individual temporary mass calculations from the starting time until the current time, for example the standard deviation of the raw momentary total mass values, divided by the calculated total mass at the current time, takes values below a predetermined, particularly suitably chosen, threshold, particularly 5%.

According to a further preferred embodiment, the method is used as a function within a tire information system of the vehicle, preferably providing information of use for a tread depth monitoring of the tire information system or another function of the tire information system. Particularly, a tread depth of a tread of a tyre of the wheel is determined based on the determined total mass.

According to a further preferred embodiment, in a first step, low-pass filtering is applied to the longitudinal force and the longitudinal acceleration particularly for denoising, in a second step, a further frequency filtering, particularly band-pass frequency filtering, is applied to the longitudinal force and the longitudinal acceleration, particularly to remove force components and acceleration components caused by slowly-varying forces or effects of aerodynamic drag and/or uphill slopes and/or downhill slopes, in a third step, by using auxiliary signals, particularly lateral acceleration and/or yaw rate and/or wheels speed, just linear longitudinal driving situations and corresponding mass calculation time intervals are selected, particularly provided by a situation OK filter that uses the auxiliary signals, in a fourth step, raw vehicle mass is calculated by using RMS values of longitudinal force and longitudinal acceleration or by performing linear regression, particularly using the longitudinal force as the independent value and longitudinal acceleration as the depending value, in a fifth step, calculated raw mass values are corrected by multiplying them with gear or transmission rate depending efficiencies, particularly learned in a learning or calibrating driving cycle of the vehicle when the vehicle mass is known, in a sixth step, a statistical method is applied on the corrected raw mass values, resulting in the total mass of the vehicle and particularly an exit time.

The drawings described herein are used to provide a further understanding for the present invention, and constitute a part of the present invention. The exemplary embodiments and descriptions of the present invention are used to explain the present invention, and do not constitute an improper limitation to the present invention. In the drawings:

Fig. 1a        shows a flow chart of a method according to the invention in a basic embodiment for determining total mass of a motor vehicle, suitable for automated gearbox vehicles and performing the simplest calculations;

Figs. 1b-d    indicate variants of longitudinal force calculation depending on specific CAN bus signals available;

Fig. 2        shows a flow chart of a method according to the invention in an alternative embodiment, suitable for automatic and manual gearbox vehicles where an axle torque signal is available on the CAN bus;

Fig. 3        shows a flow chart of a method according to the invention in a further alternative embodiment, suitable for manual gearbox vehicles where an axle torque signal is not available on the CAN bus;

Figs. 4a, 4b  show in diagrams a speed profile and respectively an engine RPM of a specific test drive where the full span of engine RPM's was employed at all gears, successively, used as a training or calibrating driving cycle;

Fig. 5        shows in a diagram the results of momentary or local mass calculations using the local RMS method according to Fig. 2 and the two local regression methods according to Fig. 3, together with gear during the driving cycle according to Figs. 4a, 4b;

Figs. 6a, 6b  show in diagrams learning of the gear efficiencies during the training or calibrating driving cycle according to Figs. 4a, 4b by learning without any prior knowledge and respectively by using the learned efficiencies as initial values and continuing learning using exponential smoothing;

Figs. 7a, 7b  show in diagrams the raw and efficiency-corrected vehicle mass calculated values for the two cases in Figs. 6a and respectively 6b;

Figs. 8a, 8b  show in diagrams the estimated vehicle mass and its 95% confidence interval, obtained by averaging the efficiency-corrected mass values from the beginning to the current time, together with the 5% exit time and performance values, for the two cases according to Figs. 6a and respectively 6b; and

Figs. 9a-c    show in diagrams results obtained on another driving cycle, performed in very different conditions than the training or calibrating driving cycle according to Figs. 4a, 4b, with gear efficiencies frozen.

The following describes the present invention in detail with reference to the accompanying figures and in combination with embodiments. It should be noted that features in the embodiments may be combined with each other. Parts corresponding to each other are always provided with the same reference signs in all figures.

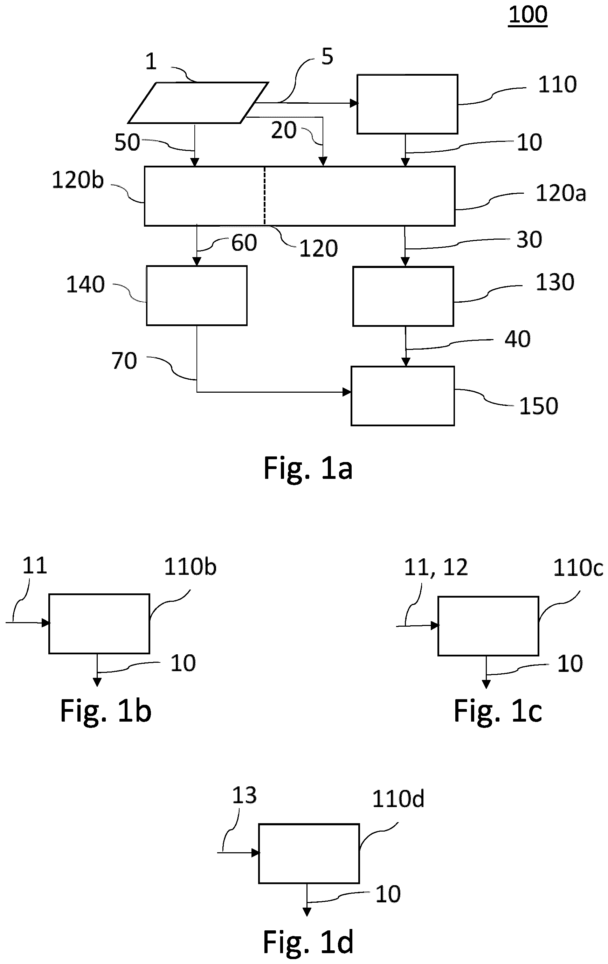

Fig. 1a shows a flow chart of a method 100 according to the invention for determining total mass of a motor vehicle in its simplest, basic form, applicable to an automated gear box vehicle. While the motor vehicle is being driven, the vehicle CAN bus 1 transmits signals 5 carrying instantaneous information related to traction/propulsion torque created by the vehicle engine and to its transmission chain. Depending on the specific signals available, step 110 calculates the longitudinal force 10. At the same time, the vehicle CAN bus 1 transmits the instantaneous vehicle longitudinal acceleration 20.

Longitudinal force 10 and longitudinal acceleration 20 are then the subject to a denoising low-pass filtering step 120a. The low-pass filtered force and acceleration, collectively notated as 30, are then subject to a band-pass processing step 130, whose purpose is to remove slowly-varying forces such as aerodynamic drag and uphill/downhill slopes and the corresponding slowly-varying acceleration component.

The band-pass filtered force and acceleration, collectively notated as 40, are then inputs to a vehicle mass calculation step 150. Calculations in this step are enabled and/or validated by a situation OK "filtering" step 140, which uses auxiliary signals, collectively represented as 50, also available on the CAN bus 1 and low-pass filtered in step 120b. The situation OK "filter" 140 selects the appropriate driving situations and the corresponding time intervals involving just linear longitudinal motion: by using predetermined, appropriately chosen, thresholds it enforces little cornering or lateral motion as provided by lateral acceleration and yaw rate signals, little wheels slip as provided by front-rear wheel speeds relative difference, non-changing gear or transmission ratio, and appropriate ranges for vehicle speed and longitudinal acceleration. If braking force is not included in the longitudinal force, it also excludes the situations when braking takes place. In order to prevent spurious outputs from sometimes fast-evolving auxiliary signals 50, actually their low-pass filtered counterparts 60 are used. The situation "filter" 140 consists of comparators for each of the enforced conditions and an AND gate, and its action does not involve any delay. Since its output 70 enables and/or validate vehicle mass calculations performed in step 150, in order to insure that the basic band-pass filtered force and acceleration signals 40 and the validating signal 70 are synchronous, low-pass filters 120a and 120b are actually the same low-pass filter 120. In its simplest form of vehicle mass estimation, effective or Root Mean Square (RMS) values are calculated for the longitudinal force and longitudinal acceleration during the time intervals validated by the situation OK filter until the current time. The vehicle estimated mass at the current time is then simply the ratio of the RMS value of longitudinal force by the RMS value of longitudinal acceleration calculated as just mentioned.

Figs. 1b-d depict variants of the longitudinal force calculations 110b-110d performed in the generic step 110 of Fig. 1a. In Fig. 1b, axle traction/propulsion torque 11 is available and longitudinal force 10 is calculated by dividing it by the wheel or tyre radius. In Fig. 1c, representing a preferred embodiment, braking axle torque 12 is also available and can be added. In Fig. 1d, axle torque is not readily available and needs to be calculated by multiplying the engine torque 13 by the transmission ratio, which can be readily provided on the CAN bus 1, or can be calculated by dividing the engine rotation speed (RPM) by the wheels speed. Besides these examples, other possibilities exist and other specific CAN signal sets can be easily adapted to provide longitudinal force 10 by person skilled in the art.

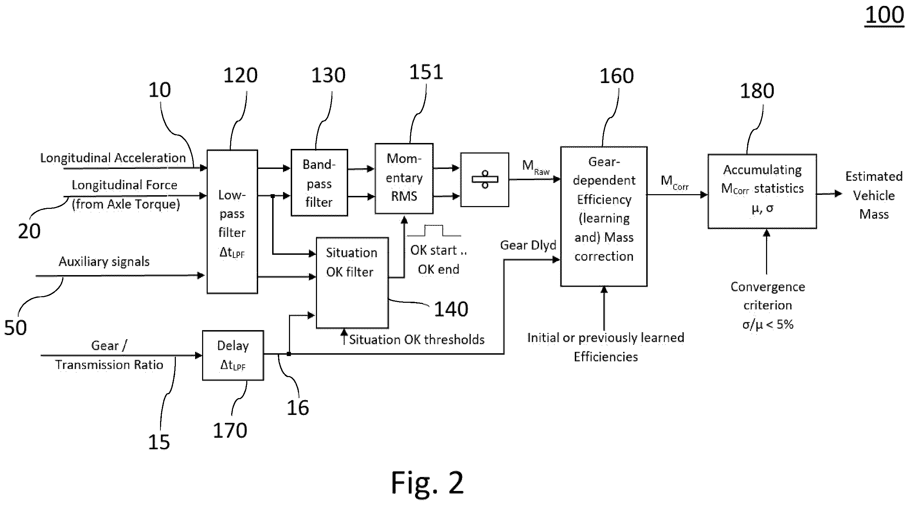

Fig. 2 shows a flow chart of method 100 according to the invention in an alternative, preferred embodiment. It is applicable to automatic or manual gear box vehicles where axle torque 11 and possibly braking torque 12 are available. With respect to the basic embodiment according to Figs. 1a-d, this one brings some improvements.

A first improvement is the calculation of momentary or local RMS for band-pass filtered force and acceleration in step 151, during the OK start - OK end intervals provided by the situation OK filter 140. Vehicle mass is next calculated by dividing force RMS by acceleration RMS, both considered at the end of the OK interval.

A second improvement is the introduction of gear efficiencies and mass correction performed by them in step 160. The use of gear efficiencies requires a gear signal or transmission ratio signal 15, depending on the available auxiliary signals 50. The gear signal can be readily available on the CAN bus 1; alternatively, the transmission ratio can be calculated by dividing engine rotation speed by wheels rotation speed. In order to insure consistency between calculated mass / efficiencies and the gear/transmission ratio signal 15, step 170 delays the latter by the same time amount as the delay resulting from the low-pass filtering step 120, resulting in a delayed gear/transmission ratio signal 16. Gear-dependent transmission efficiency usage and calculated vehicle mass values corrections are performed as presented next.

Vehicle (raw) mass $M_{Raw}$ is in principle calculated as the ratio between longitudinal force and longitudinal acceleration of the vehicle subject to that force:

$$M_{Raw} = (\text{Longitudinal force})/(\text{Longitudinal acceleration}).$$

The actual force that causes acceleration is actually smaller because of transmission losses. The losses can be quantitatively characterized by a subunitary transmission efficiency Eff. Then, the calculated vehicle mass including gear efficiency $M_{Eff}$ is:

$$M_{Eff} = (Eff*(\text{Longitudinal force}))/(\text{Longitudinal acceleration}) = Eff*M_{Raw} .$$

We have: Eff = $M_{Eff}/M_{Raw}$. Efficiency can be determined in calibrating conditions, when the would-be estimated mass can be measured using a scale, as the vehicle measured mass VMM. Consequently,

$$Eff = VMM / M_{Raw} .$$

If several measurements are performed and they are affected by noise (which is assumed to have zero mean value), then $M_{Raw}$ is replaced by the average value of the raw mass calculations $M_{Raw,Avg}$:

$$Eff = VMM / M_{Raw,Avg} .$$

Consider available data index n. An algorithm is needed which, as a new raw mass calculation, $M_{Raw,n}$ has become available, estimates Eff as $Eff_n$, that is to estimate it, preferably iteratively. Using $Eff_n$, the estimated mass $M_{Eff,n}$ is calculated as

$$M_{Eff,n} = Eff_n * M_{Raw,n} .$$

Since transmission losses can be different for each gear, this is done gear-wise - separately for each gear. After a large n, $Eff_n$ should converge to Eff and $M_{Eff,n}$ should converge to VMM.

To learn gear efficiencies, the vehicle measured mass is needed. It is to be provided in one or several driving cycles, appropriately designed to cover virtually all the driving situations, gears, speeds and accelerations, as the training/learning data for the gear efficiencies learning algorithm(s) that follow. Following learning, efficiencies are frozen/stored and vehicle mass is calculated using the stored values.

The simplest case and calculations are obtained by considering that the gear / transmission rate depending efficiencies are constants. Two embodiments of efficiency learning and mass calculation for this case are described in detail here; iteration (new mass calculation) n comprises the following steps, performed at the end of the validity interval provided by the situation OK filter. In this example local RMS force and acceleration are used however, the raw mass calculation provided by the current local regression can also be used.

According to a first possible embodiment related to transmission efficiency, efficiencies are learned from scratch, without any prior knowledge: referred to as version AN (from Average - No initialization):

$$M_{Raw,n} = \frac{Traction\ force_{RMS,n}}{Longit.acceleration_{RMS,n}}$$

TE_AN.1: The current raw mass calculation is: . Average raw mass to date:

$$M_{Raw,Avg,N} = \frac{1}{N} \sum_{n=1}^{N} M_{Raw,n}$$

As widely known, the average can be calculated iteratively for each *n*.

$$Eff_{Raw,n} = \frac{VRM}{M_{Raw,n}}$$

TE_AN.2: Raw and corrected current efficiency: , $Eff_{Corr,N} = \dfrac{VRM}{M_{Raw,Avg,N}}$ .

TE_AN.3: Current vehicle mass calculation corrected for efficiency: $M_{Corr,N} = Eff_{Corr,N} \cdot M_{Raw,Avg,N}$.

A second possible embodiment related to transmission efficiency is obtained when prior learning has been performed and provides an initialization value, and learning continues - referred to as version ES (from Exponential Smoothing, also known as Exponential Moving Average):

$$Eff_{Raw,n} = \frac{VMM}{M_{Raw,n}}$$

TE_ES.1: Raw current efficiency and its inverse: , $\dfrac{1}{Eff_{Raw,n}} = \dfrac{M_{Raw,n}}{VMM}$ . *VMM*

For all *N* including 1, efficiency is calculated iteratively, using exponential smoothing, with α = 0.8 or another suitable value:

$$1/Eff_n = \alpha \cdot \frac{1}{Eff_{n-1}} + (1 - \alpha) \cdot \frac{1}{Eff_{Raw,n}} \ .$$

For $n = 1$, $Eff_{n-1} = Eff_0$, the initialization efficiency.

Inverse efficiencies were considered such that for large $N$ $Eff_N$ converges to VMM/$M_{Raw,Avg,N}$ (as in the previous version).

TE_ES.2: Current vehicle mass calculation corrected for efficiency: $M_{Corr,N} = Eff_N \cdot M_{Raw,N}$.

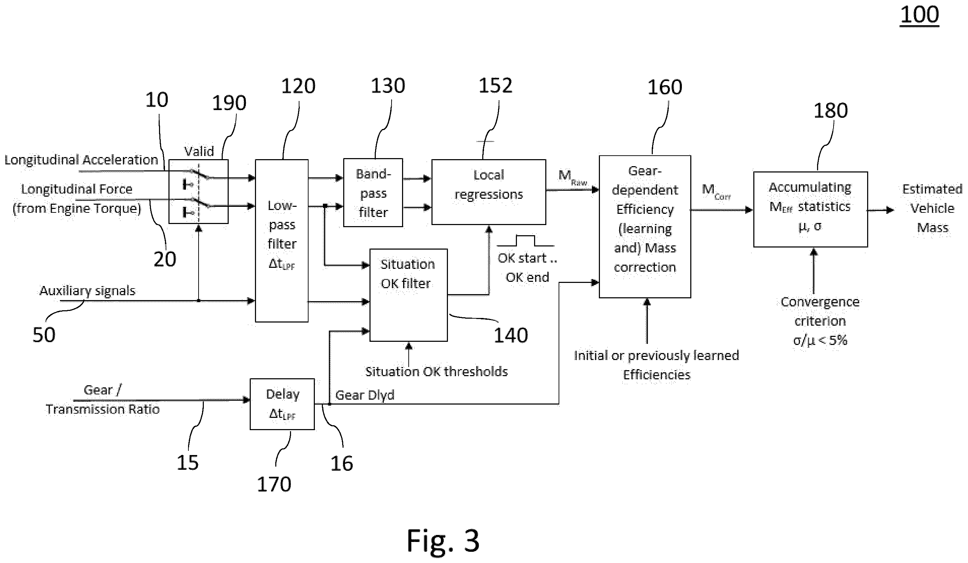

Fig. 3 shows a flow chart of method 100 according to the invention in a further alternative, preferred embodiment, applicable to manual gear box vehicles where traction/propulsion axle torque 11 isn't readily available and needs to be calculated from the engine torque 13, as introduced in Fig. 1d. Specific to this embodiment is that the engine torque values do not result in valid values of the longitudinal force 10 and are enabled, by valid step 190, when several conditions on some of the auxiliary signals 50 are met: clutch pedal isn't depressed, gear isn't in neutral position but is engaged and transmission ratio is stable. If braking torque is available, it can be contributed to the longitudinal force; otherwise, a braking pedal not depressed condition needs to also be included.

An advantageous illustrated in Fig. 3 is that momentary or local mass calculations are performed using the local regressions step 152, during the current validity interval provided by the situation OK filter 140. First raw momentary total mass values MFA can be calculated as the slope of linear regression of the band-pass filtered longitudinal force as a function of the band-pass filtered longitudinal acceleration, F(A). This slope has a dimension of mass and one would be tempted to use it as an estimation of the vehicle mass. However, given the property of linear regression of accounting for noise in the dependent variable, since the signals or data regarding the longitudinal acceleration have much more random noise than the data regarding the longitudinal force, it is of advantage to use longitudinal acceleration as the dependent variable and longitudinal force as the independent variable. Consequently, in step 152 linear regression of the longitudinal acceleration as a function of longitudinal force, A(F) is performed. The resulting regression coefficient is an inverse mass; by inverting it, individual second raw momentary total mass values MAF, are calculated. Noise in the data and in raw mass values can be evaluated using the difference between MFA and MAF and, if noise exceeds a predetermined, particularly an appropriately chosen, threshold, the momentary MAF can be discarded.

It can be noticed that step 151 - mass calculation by dividing local RMS of force and acceleration as shown in Fig. 2 - and step 152 - mass calculation using local regressions as shown in Fig. 3 - can be used interchangeably in the two embodiments of Figs. 2 and 3. By using data that are local in time they allow to better dealing with cases when the vehicle payload may change dynamically. They also allow performing gear-dependent mass corrections, step 160, explained in detail above in connection with Fig. 2.

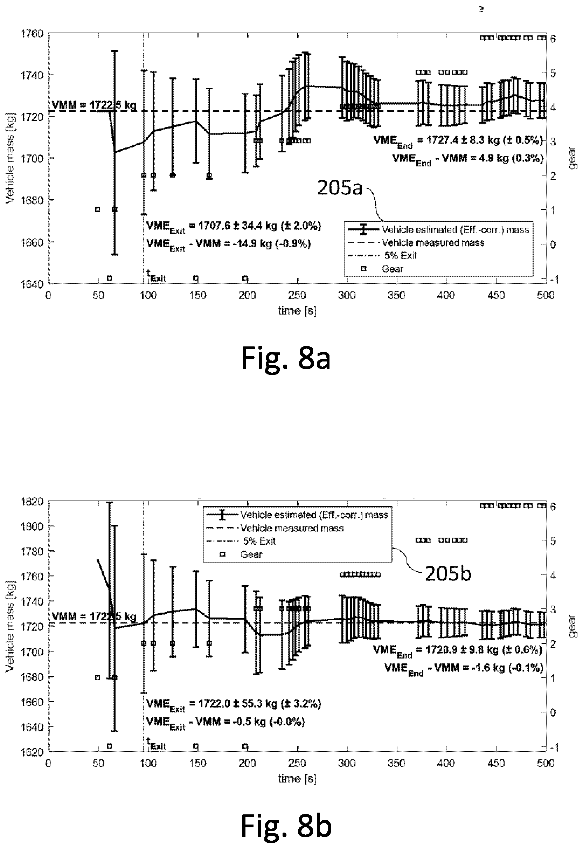

In both Fig. 2 and Fig. 3 local mass calculations are followed by an accumulating statistics step 180, which is detailed in the explanations related to Figs. 8a, 8b.

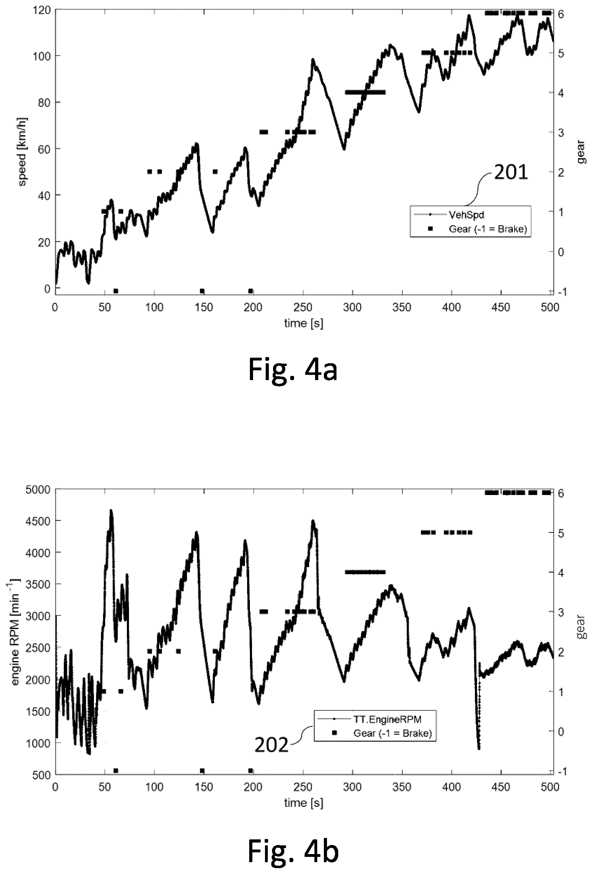

Figs. 4a and 4b show a speed profile, an engine RPM and a gear for a manual gear box vehicle during a training/calibrating driving cycle performed mostly on a highway. Fig. 4a shows a diagram depicting the speed profile and the gear over time, wherein a rectangle 201 in the diagram shows the legend for the speed and for the gear. Fig. 4b shows a diagram depicting the engine RPM and the gear over time, wherein a rectangle 202 in the diagram shows the legend for the engine RPM and for the gear. The specific shape of the data resulted from the wish to cover the full span of commonly used engine RPM range at all gears, within the maximum speed of 120 km/h.

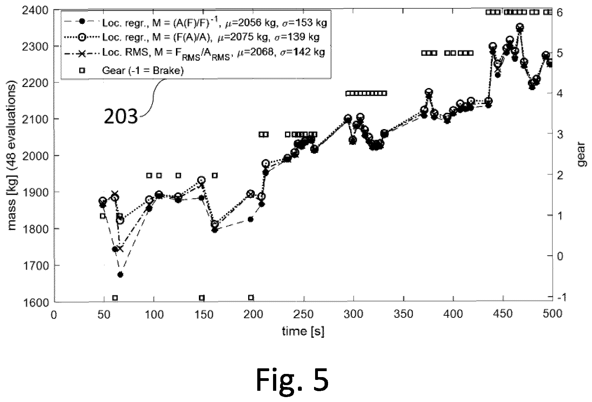

Fig. 5 shows in a diagram the results of momentary or local mass calculations using the local RMS method according to Fig. 2 and the two local regression methods according to Fig. 3, together with gear during the driving cycle according to Figs. 4a, 4b, wherein a rectangle 203 in the diagram shows the corresponding legend, according to which filled circle and dashed line represents M = [F(A)]$^{-1}$ (inverse) regression, empty circle and dotted line represents M = A(F) (direct) regression, x's and dash-dot line represents division of local RMS of F and A. The inverse regression mass calculation results are always smaller than the results for the direct regression, and the RMS division results are typically - but not always - in-between. There are some cases where the noise in the data, seen as the difference between the direct and inverse regression results, are somehow larger, but they were not excluded.

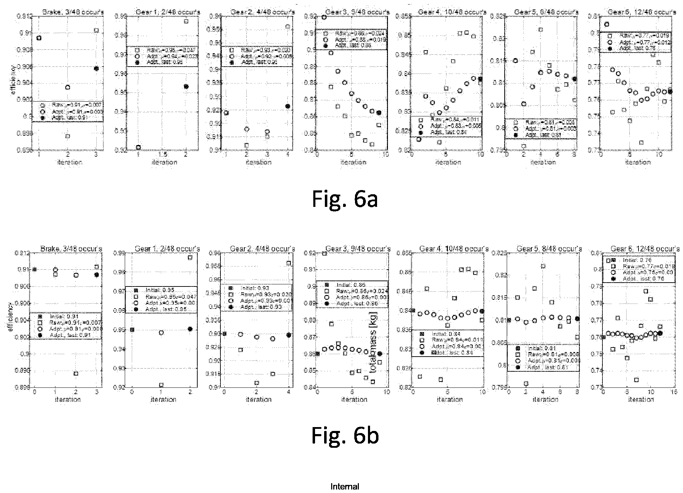

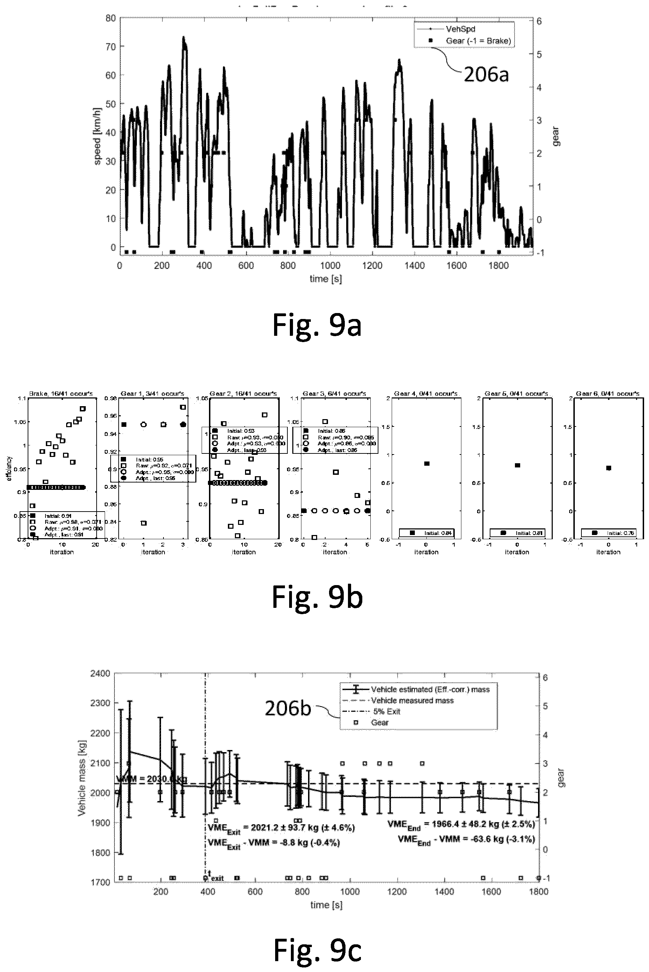

Figs. 6a and 6b show in diagrams the learning of the gear efficiencies during the training or calibrating driving cycle according to Figs. 4a, 4b by learning without any prior knowledge and respectively by using the learned efficiencies as initial values and continuing learning using exponential smoothing, wherein the raw or initial (represented by squares) and adapted (represented by circles) gear efficiencies in the efficiency learning step 160 according to Figs. 2 and 3 following the occurrence of a new local mass calculation by the momentary/local RMS mass calculation step 151 according to Fig. 2 or the local regressions step 152 according to Fig. 3 are displayed gear-wise, for gears 1 through 6 and -1 (braking), and wherein Fig. 6a shows the case when efficiencies are learned without any initialization (version TE_AN according to Fig. 2,) and Fig. 6b shows the case when efficiencies are initialized with the last values calculated in the previous case and updated using exponential smoothing (version TE_ES according to Fig. 2, ), with $\alpha = 0.95$. The starting raw/initial efficiency is represented by an empty or filled square; the last adapted efficiency is represented by a filled circle. Learning takes place differently, but results are consistent. A case of exponential smoothing learning with $\alpha = 0.1$ can be seen in Fig. 9b; this $\alpha$ value actually freezes gear efficiencies to their initial values and is equivalent to no learning taking place.

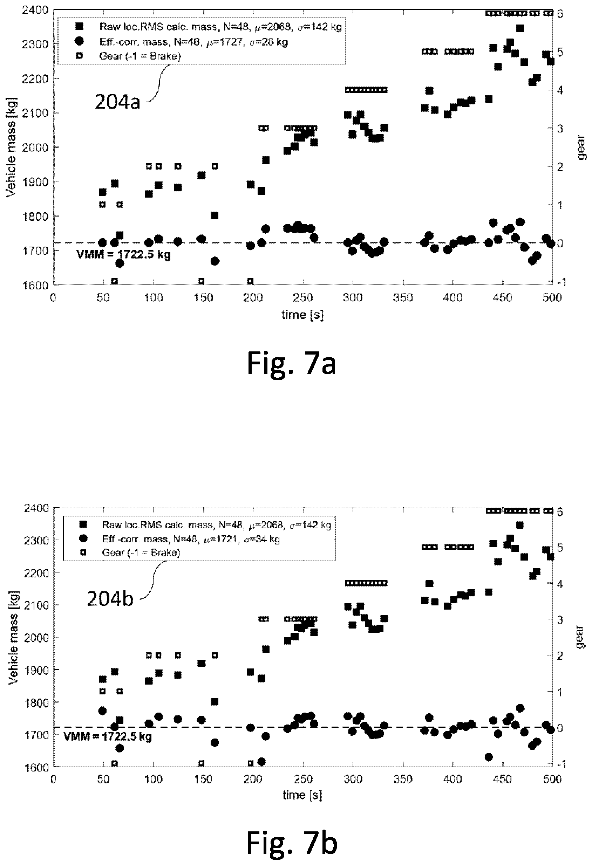

Figs. 7a and 7b show in diagrams raw and efficiency-corrected vehicle mass calculated values for the two learning cases in Figs. 6a and respectively 6b together with the gear at time of mass calculations., Fig. 7a for version TE_AN, Fig. 7b for version TE_ES, wherein rectangles 204a, 204b in the diagrams show the corresponding legend, according to which the raw mass calculated values $M_{Raw}$ are represented by filled squares and the efficiency-corrected mass calculated values $M_{Corr}$ are represented by filled circles, which are the inputs and respectively the outputs for step 160 according to Fig. 2 and Fig. 3 (data correspond to Fig. 2), and according to which the gear at time of mass calculations Gear Dlyd is represented by empty squares, which is the other input for step 160. In the diagrams there is also displayed, as a horizontal dashed line, the vehicle measured mass VMM and its value, to which the corrected mass values are made to converge.

Figs. 8a and 8b show in diagrams as the results of the accumulated statistics step 180 according to Figs. 2 and 3 (data correspond to Fig.2) the estimated vehicle mass and its 95% confidence interval, obtained by averaging the efficiency-corrected mass values from the beginning to the current time, together with the 5% exit time, for the two cases according to Figs. 6a and respectively 6b. Also shown is the vehicle measured mass VMM, to assess performance, in this case of the learning phase, Fig. 8a for version TE_AN and Fig. 8b for version TE_ES. The rectangles 205a, 205b in the diagrams show the corresponding legend. Calculated are the average of the efficiency-corrected mass values seen in the previous corresponding figures, starting from the beginning of the driving cycle until the current time, $\mu(t)$, and the standard deviation of the average until the current time $\sigma(t)$; displayed are as error bars, $\mu(1) \pm 2\sigma(t)$ - to consider a 95% confidence level. When the relative error calculated as the $2\sigma(t)/\mu(t)$ ratio falls below a suitably chosen threshold, in this case 5%, exit is signaled and the mass estimation can be finished. This is represented on the figures as $t_{Exit}$. Irrespective of it, in the two Figs. 8a and 8b calculations continue until the end of the data. For both Exit and End performance is displayed as the Vehicle Mass Estimation at that time, $VME_{Exit} = \mu(t_{Exit}) \pm 2\sigma(t_{Exit})$ and the error with respect to the known vehicle mass, $VME_{Exit}$ -VMM, and similarly for End. It is expected that the latter errors be small, as this is the learning phase - VMM is known.

Figs 9a-9c show in diagrams data or results obtained on another driving cycle, performed in very different conditions than the training or calibrating driving cycle according to Figs. 4a, 4b, with gear efficiencies frozen, namely: city driving, a significantly increased vehicle mass and no learning. Fig. 9a shows the speed profile and the gear over time, wherein a rectangle 206a in the diagram shows the legend for the speed and for the gear. While VMM is known, learning is disabled and gear efficiencies are the ones learned before. Disabled learning ($\alpha = 1$) can be seen in Fig. 9b, which carries the same information as Figs. 6a, 6b, but where the gear efficiencies (circles) are no longer adapted but are constant, as provided by their initialization value (filled square). Fig.9c carries the same information as Figs. 8a, 8b (the rectangle 206b in the diagram show the corresponding legend), with the difference that in real life, following learning, the vehicle mass is unknown. Here, it was used to assess performance: while it happens that at Exit time $VME_{Exit}$ is close to VMM, $VME_{End}$ - VMM is larger than on Figs. 8a, 8b. This is normal and is explained mainly by the very simple model used; for the tire information system needs, this trade-off between simplicity and performance is good.

**Claims**

1. Method (100) for determining a total mass of a motor vehicle with at least one wheel during operation of the motor vehicle, wherein instantaneous longitudinal force (10) on the vehicle and its associated instantaneous longitudinal acceleration (20) are determined in the form of associated pairs of values, using longitudinal force (10) and longitudinal acceleration (20) related signals existing on a vehicle bus (1), particularly on a vehicle CAN bus, wherein the total mass is calculated based on of Newton's second law using the associated pairs of values, wherein frequency filtering, particularly band-pass frequency filtering, is applied to the longitudinal force and the longitudinal acceleration, particularly to remove force components and acceleration components caused by slowly-varying forces or effects of aerodynamic drag and/or uphill slopes and/or downhill slopes, and wherein the mass calculation be only performed during a predetermined, particularly longitudinal or linear or otherwise appropriate, motion of the vehicle.

2. Method (100) according to claim 1, wherein mass calculation intervals are provided by a situation OK filter that uses auxiliary signals (50) available on the vehicle bus (1), particularly on the vehicle CAN bus, and uses predetermined, particularly appropriately chosen, thresholds to enforce a predetermined, particularly a predetermined little, cornering or lateral motion as indicated by lateral acceleration and yaw rate and/or a predetermined, particularly a predetermined little, wheels slip as indicated by front-rear wheel speed relative difference and/or non-changing gear or transmission ratio and/or predetermined, particularly predetermined appropriate, ranges for vehicle speed and/or longitudinal acceleration (20).

3. Method (100) according to claim 2, wherein the auxiliary signals (50) used by the situation OK filter are subject to a same frequency filtering, particularly a same low-pass filtering, as the one used for longitudinal force (10) and longitudinal acceleration (20).

4. Method (100) according to one of the preceding claims, wherein the motor vehicle comprises a manual transmission, wherein the vehicle longitudinal force (10), particularly the vehicle longitudinal traction or propulsion force, and its associated longitudinal acceleration (20) are determined and/or used only when the longitudinal force (10) is determined to be valid, preferably wherein the longitudinal force (10) is determined to be valid when a clutch pedal of the vehicle is not depressed and/or gear is engaged and not in neutral position and/or a transmission rate is stable.

5. Method (100) according to one of the preceding claims, wherein the total mass at current time is calculated as a ratio between the RMS value of the longitudinal force divided by the RMS value of the longitudinal acceleration, preferably wherein both RMS values are calculated during validity intervals resulting from the situation OK filter, starting from a predetermined, particularly suitably chosen, initial time up to the current time and using either values obtained from a band-pass filtering step (130), or by exponentially smoothing the values resulting from a band-pass filtering step (130).

6. Method (100) according to one of claims 2 to 5, wherein raw momentary total mass values are calculated as a ratio between the raw momentary RMS value of the, particularly band-pass filtered, longitudinal force (10) divided by the RMS raw momentary RMS value of the, particularly band-pass filtered, longitudinal acceleration (20), wherein both raw momentary RMS values are calculated during each validity interval provided by the situation OK filter.

7. Method (100) according to one of claims 2 to 6, wherein first raw momentary total mass values (MFA) are calculated during a current validity interval provided by the situation OK filter, as a slope of linear regression of the, particularly band-pass filtered, longitudinal force (10) as a function of the, particularly band-pass filtered, longitudinal acceleration (20), and wherein second raw momentary total mass values (MAF) are calculated as an inverse slope of linear regression of the, particularly band-pass filtered, longitudinal acceleration (20) as a function of the, particularly band-pass filtered, longitudinal force (10), preferably wherein noise in the data of longitudinal acceleration (20) and longitudinal force (10) and/or in the first and second raw momentary total mass values (MFA, MAF) is evaluated using first and second raw momentary total mass values (MFA, MAF), particularly preferably if noise exceeds a predetermined threshold, the second raw momentary total mass value (MAF) is discarded.

8. Method (100) according to one of claims 2 to 7, wherein the situation OK validity intervals are subject to an additional constraint, wherein the additional constraint is a minimum range of longitudinal accelerations (20) and/or a minimum number of longitudinal force (10) and longitudinal acceleration (20) samples existing in the interval.

9. Method (100) according to one of claims 6 to 8, wherein power losses on the transmission chain of the vehicle that depend on transmission ratio or engaged gear are taken into account as subunitary efficiencies, wherein corrected momentary total mass values are calculated by multiplying the raw momentary total mass values by the subunitary efficiencies, preferably wherein gear efficiency calculations are performed on a gear or transmission ratio basis corresponding to the validity interval provided by the situation OK filter, particularly preferably wherein the gear or transmission ratio input to the gear-dependent efficiency input to these calculations is delayed by the same amount of time that the, particularly low-pass, filtering creates.

10. Method (100) according to claim 9, wherein gear efficiencies are calculated and learned during a predetermined, particularly suitably performed, calibration driving cycle, particularly when the vehicle is weighted and its total mass is known, using raw momentary total mass calculations and the known total mass, preferably wherein after the gear efficiencies have been learned, in ordinary driving operation of the vehicle, corrected momentary total mass values are calculated by multiplying the raw momentary total mass values by the learned gear efficiencies

11. Method (100) according to claim 9 or 10, wherein gear efficiencies are considered as depending on the vehicle engine rotational speed and are approximated as linear or quadratic polynomials.

12. Method (100) according to one of claims 6 to 11, wherein power losses depending on the temperature of an engine coolant are also taken into account as subunitary efficiencies, wherein corrected vehicle momentary total mass values are calculated by multiplying the raw momentary total mass values by the considered subunitary efficiencies, preferably wherein the power losses depending on the temperature of the engine coolant are learned during a number of predetermined calibration driving cycles, using weighted vehicle, particularly preferably performed starting with various low temperatures.

**13.** Method (100) according to one of claims 5 to 12, wherein the total mass at current time is calculated by applying a statistical method on the raw momentary total mass values or the corrected momentary total mass values, particularly corrected for gear efficiencies, preferably performed starting from a predetermined, particularly suitably chosen, starting time until the current time, particularly the ending time of the calculations, or based on a convergence time when the relative error of the total mass calculation, particularly evaluated as the ratio between a measure of the noise in the individual temporary mass calculations from the starting time until the current time, for example the standard deviation of the raw momentary total mass values, divided by the calculated total mass at the current time, takes values below a predetermined, particularly suitably chosen, threshold, particularly 5%.

**14.** Method (100) according to one of the preceding claims, wherein the method (100) is used as a function within a tire information system of the vehicle, preferably providing information of use for a tread depth monitoring of the tire information system or another function of the tire information system.

100

Fig. 1a

Fig. 1b

Fig. 1c

Fig. 1d

Fig. 2

EP 4 692 740 A1

Fig. 3

Fig. 4a

Fig. 4b

Fig. 5

Fig. 6a

Fig. 6b

Fig. 7a

Fig. 7b

Fig. 8a

Fig. 8b

Fig. 9a

Fig. 9b

Fig. 9c

Europäisches
Patentamt

European
Patent Office

Office européen
des brevets

# EUROPEAN SEARCH REPORT

**Application Number**

EP 24 46 5555

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GB 2 535 775 A (JAGUAR LAND ROVER LTD [GB]) 31 August 2016 (2016-08-31) * abstract; claim 1; figure 1 * ----- | 1-14 | INV. G01G19/02 |

**TECHNICAL FIELDS SEARCHED (IPC)**

G01G

The present search report has been drawn up for all claims

| Place of search | Date of completion of the search | Examiner |
|---|---|---|
| The Hague | 23 December 2024 | Katerbau, Ragnar |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 46 5555

This annex lists the patent family members relating to the patent documents cited in the above-mentioned European search report.
The members are as contained in the European Patent Office EDP file on
The European Patent Office is in no way liable for these particulars which are merely given for the purpose of information.

23-12-2024

| Patent document cited in search report | | Publication date | Patent family member(s) | | Publication date |
|---|---|---|---|---|---|
| GB 2535775 | A | 31-08-2016 | GB | 2535775 A | 31-08-2016 |
| | | | WO | 2016135317 A1 | 01-09-2016 |

EPO FORM P0459

For more details about this annex : see Official Journal of the European Patent Office, No. 12/82